# EUROPEAN PATENT APPLICATION

(11) **EP 1 511 347 A2**
(43) Date of publication of application: **02.03.2005**
(21) Application number: 04077418.4
(22) Date of filing: 26.08.2004
(51) Int. Cl.: H04Q 7/38

(54) **A method and system to restrict device features**

(30) Priority: 27.08.2003 US 498112 P
(71) Applicant: Koninklijke KPN N.V., 9726 AE Groningen (NL)
(72) Inventor: Selgert, Franklin, 2651 BL Berkel en Rodenrijs (NL)
(74) Representative: Wuyts, Koenraad Maria

(57) **Abstract**

The present invention provides a solution to restrict device features whereby conditionally allowing device capabilities in specific geographical areas. A device is triggered in a specific geographical area and receives a rights object associated to the specific geographical area. The behavior of the device is controlled by applying rules enclosed in the rights object.

## Description

### Field of the invention

The invention relates to restricting device features in specific geographical areas.

### Background of the invention

There is an increasing amount of devices with rich capabilities such as recording images, video and sound, that are connectable to a network. Via the network the recordings can be transferred to other devices. Images, video and sound recorded with these devices can be subject to copyright or confidentiality. In certain areas like e.g. at pop concerts, art museums, research laboratories and military areas it is therefore desirable to be able to restrict devices in their capabilities or conditionally allow devices to use their capabilities.

US5940764 discloses a PHS terminal disabling system. It realizes a PHS terminal disabling system, which can improve the recovery rate of lent PHS terminals. The PHS terminal disabling system includes a PHS terminal, a plurality of cell sites for communicating with the PHS terminal, and an exchange for performing an exchanging operation of the PHS terminal via the cell sites. The PHS terminal disabling system further includes a data base for holding, as management data for the PHS terminal, position information representative of a position of the PHS terminal and available area information representative of an area within which the use of the PHS terminal is permitted, and a main control apparatus connected to the exchange and the data base for updating the position information of the PHS terminal with a current position of the PHS terminal represented by data received from any cell site via the exchange and for causing, when the position of the PHS terminal is not included in the area represented by the available area information, the exchange to perform no exchanging operation. It is not possible to disable specific capabilities of the terminal in an area. Also it is not possible to conditionally allow usage of the terminal or certain capabilities of the terminal. The current position of the terminal can only be determined by using cell information from the mobile communication system.

EP0641137 discloses a method and apparatus for access restriction to a mobile radio system. To restrict the access of mobile stations to a mobile radio system with a plurality of mobile stations, the radio cell exhibiting a plurality of locating areas and the mobile station being authenticated on a service request by the mobile station, a current locating identification identifying the respective locating area is transmitted to the mobile station, where it is stored. A locating identification of at least one locating area allowed for the mobile station is stored in an identification module. The current locating information is compared with the locating identification stored there and access to the mobile radio system is inhibited when they do not agree. It is not possible to disable specific capabilities of the mobile station in an area. Also it is not possible to conditionally allow usage of the mobile station or certain capabilities of the mobile station. The current position of the mobile station can only be determined by using location information from the mobile radio system.

US6438385 discloses a method for eliminating the disturbance caused by a mobile station situated within a certain area. In order to be able to prevent disturbance caused by a mobile station reliably, the mobile station is provided with control means for the muting, i.e. disabling transmissions, of the mobile station as a response to a predetermined message transmitted to the mobile station, and transmitting means are arranged in said certain area for the transmitting of said predetermined message to a mobile station situated in the area in order to mute the mobile station. It is not possible to disable specific capabilities of the mobile station in an area. Also it is not possible to conditionally allow usage of the mobile station or certain capabilities of the mobile station. The location of the mobile station cannot be determined. The mobile station merely reacts on received signals transmitted to the mobile station.

WO9825433A1 discloses a method and apparatus for restricting operation of cellular telephones to well delineated geographical areas. The cellular telephone is equipped with a location device for ascertaining the current geographical location of the cellular telephone. The ascertained geographical location is compared with information pertaining to the allowability of operation of cellular telephones in various geographical locations. A determination is made as to whether the cellular telephone is allowed to operate in its current geographical location. The cellular telephone accordingly enables or disables operation of the cellular telephone or of a requested service or capability of the cellular telephone. It is not possible to conditionally allow usage of the cellular telephone or certain capabilities of the cellular telephone. They can merely be enabled or disabled.

### Problem definition

Existing solutions for restricting device features in specific geographical areas are not capable of conditionally allowing capabilities of the device.

### Aim of the invention

It is an aim of the invention to provide a method and system for conditionally allowing device capabilities in specific geographical areas.

### Summary of the invention

The present invention provides a solution to restrict device features whereby conditionally allowing device capabilities in specific geographical areas.

According to an aspect of the invention a method is provided for conditionally allowing a device capability in a specific geographical area. The method can comprise the following steps or a subset of the following steps: triggering a device in the specific geographical area; receiving in the device a rights object, possibly a DRM rights object, associated to the specific geographical area; controlling the behavior of the device by applying rules enclosed in the rights object. This is advantageous because it enables the use of device capabilities at specific geographical areas under predefined conditions. The device can be connected to a communication network, which can be capable of detecting the current geographical location of the device. This has the advantage that a mobile operator has control over the definition of specific geographical areas. Triggering the device in the specific geographical area can then be done by a signal received from the communication network. Receiving the rights object can then also be done via the communication network. Alternatively the device is capable of receiving a signal from a short-range beacon. This has the advantage that local parties, like e.g. museums, can define the specific geographical area themselves. Triggering the device in the specific geographical area can then be done by the signal received from the short-range beacon. Receiving the rights object can then also be done via the short-range beacon. In yet another alternative the device is capable of receiving information about its current geographical location from a satellite. This has the advantage that only the device needs to be able to detect its current location. Triggering the device in the specific geographical area can then be done by the information received from the satellite.

According to a second aspect of the invention a system is provided for conditionally allowing a device capability in a specific geographical area. The system can comprise a device equipped with recording capabilities. The system can further comprising a triggering source and a rights object source. The device can comprise means for receiving a trigger from the triggering source when in the specific geographical area. The device can comprise means for receiving a rights object, possibly a DRM rights object, associated to the specific geographical area from the rights object source. The device can comprises means for controlling its behavior by applying rules enclosed in the rights object.

According to a third aspect of the invention a device is provided for use in the system above. The device can comprise means for receiving a trigger when in a specific geographical area, means for receiving a rights object, possibly a DRM rights object, associated to the specific geographical area and/or means for controlling its behavior by applying rules enclosed in the rights object. The device can be connected to a communication network, in which case the device can comprise means for receiving the trigger from the communication network when in the specific geographical area. In this case the device can also comprise means for receiving the rights object via the communication network. Alternatively the device can be capable of receiving a signal from a short-range beacon, in which case the device can comprise means for receiving the trigger from the short-range beacon when in the specific geographical area. In this case the device can also comprise means for receiving the rights object via the short-range beacon. In yet another alternative the device can be capable of receiving information about its current geographical location from a satellite, in which case the device can comprise means for receiving the trigger from the satellite when in the specific geographical area. The device can comprise an application program interface for receiving the rights object.

### Brief description of the drawings

The invention will be explained in greater detail by reference to exemplary embodiments shown in the drawings, in which:
Figure 1 schematically shows a device connected to a network according to an aspect of the invention;
Figure 2 schematically shows a device according to an aspect of the invention.

### Detailed description of the invention

For the purpose of teaching of the invention, preferred embodiments of the method and system of the invention are described in the sequel. It will be apparent to the person skilled in the art that other alternative and equivalent embodiments of the invention can be conceived and reduced to practice without departing from the true spirit of the invention, the scope of the invention being only limited by the claims as finally granted.

The invention enables 'geographical location' as one of the DRM (Digital Rights Management) enforcing elements on self generated content. The aspect of DRM from an actor forced on recordings of any kind of another actor is new. Of course instead of DRM technology other equivalent technologies can be used to achieve rights management.

With existing techniques like wireless LAN, Bluetooth, RF tags, GSM, UMTS, GPS, and AGPS, locations, i.e. geographical areas, can be marked. The invention enables the owner of an area, or another controlling party, to set certain characteristics on the area. A devices operating in a marked location can receive a rights object (e.g. a DRM rights object) that controls the behavior of the device for any recording in the area of presence. The behavior can vary from free use, to conditionally allowing, to blocking certain device capabilities. Examples of device capabilities are a video camera to record video, a photo camera to record photos and a sound recorder to record sound. When DRM is enforced by a location, the device will force certain rules on the recordings.

In commercial situations, like at concerts or in museums, there can be the possibility to purchase rights to record, view and/or use the recordings taken on that location. This rights purchase process can be enriched by content offerings from the same location. The DRM enforcement can have additional restrictions, e.g. time restriction or forward restriction.

In case a mobile phone is used as recording device, location owners can ask a mobile network operator to list their area as restricted (DRM enforcement). This information is then stored within the mobile network. Now the mobile operator can facilitate the commercial DRM offering of a location by detecting when a mobile phone enters the listed restricted areas.

Beacons can be used to trigger a device to start capability restricting actions. A beacon is a short-range transmission device using e.g. wireless LAN, Bluetooth or RF-tag technology. On receiving signals from a beacon a device can start capability restrictive actions by acquiring a DRM rights object from the beacon or via another network the device is connected to.

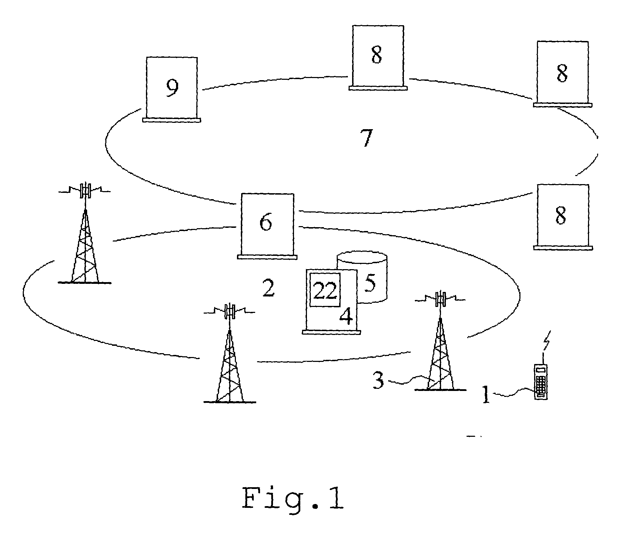

In figure 1 a device 1 is connected to a telecommunication network 2 via base stations 3. The network 2 is controlled by control means 4, including a database 5. Of course, in practice the control means 4 comprise a plurality of servers, exchanges, registers, databases, and etcetera. The control means can be based on "Intelligent Network" (IN) technology, which is fit for and matching handset position to DRM areas, e.g. by means of geographical coordinates, which can be stored in the relevant database(s).

By means of a telephony/internet interface-server 6 the telecommunication network 2 is linked with the internet ("world wide web") 7. Connected to the internet 7 are several servers 8 which can be enabled to deliver information in the form of graphics, text, images, DRM keys, and etcetera. A server 9 can serve as "portal" for services to and from device 1, in this case a mobile terminal.

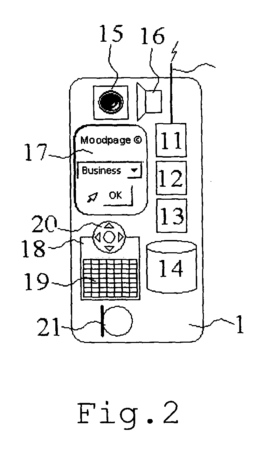

Figure 2 shows schematically the architecture of device 1 more in detail. Shown is an antenna 10, connected to a transceiver 11, which, in turn, is connected with a device controller 12. Controller 12 is connected with an API module 13, a register 14, a camera 15, a loudspeaker 16, a video display screen 17, an input module 18, comprising a keyboard 19 and a pointing device 20, and a microphone 21. For sake of clarity, the interconnections between the various modules are not shown in figure 2.

External signaling from a secured network can influence the controller in the device by applying restrictions to capabilities of the camera, immediate by blocking capabilities or by a form of encryption to allow for DRM like policies. This can also apply to a non-voice device, e.g. a camera with some kind of wireless interface.

Triggering of the device that entered an area with a DRM restrictions policy can be done in numerous ways. E.g. a beacon or gate that interacts directly with the device can be used, or the device itself can trigger a DRM restriction policy when one of the capabilities is about to be used. In the last example the device can determine its geographical location by means of e.g. AGPS. With network-databases the position of the device and areas with DRM policies can be matched. As a result of a hit a set of DRM parameters can be sent and stored locally on the device.

If a non-blocking DRM policy is in place, one or more capabilities of the device can be used. Any recordings stored in the device however will have a DRM marking in accordance with the received DRM parameters. Whenever a user of the device wants to view, manipulate, copy or send (by e-mail or MMS e.g.) the recordings, the DRM restriction will be applied. The user is informed of the DRM policy and possibilities to buy DRM keys to lift the restrictions. Notifying the user of restriction can alternatively be done before actually making the recordings.

DRM parameters can be offered through a server connected to the internet. DRM area matching is done by the operator, or through a locally installed beacon or gate, e.g. any apparatus that can interact wireless with a device only within a controlled distance or within a controllable area. Optionally a controlling party that has the rights to a DRM location can offer additional media products to the user that buys or wants to buy DRM rights objects.

DRM rights objects can be obtained before visiting a DRM location.

To enable DRM features, the device 1 comprises the API (Application Program Interface) module 13 mentioned before. In general an API is a software module comprising a language and message format used by an application program to communicate with the operating system or some other control program such as a database management system or communications protocol. API's can be implemented by writing function calls in the program, which provide the linkage to the required subroutine for execution. Thus, an API implies that some program module is available in the computer to perform the operation or that it must be linked into the existing program to perform the tasks.

The parameters can partly be valid as local device settings relating to the device hardware, and/or software to be registered in the device register 14. The parameters can partly be valid as settings for the telecommunication network 2, to be registered in database 5.

## Claims

1. Method for conditionally allowing a device capability in a specific geographical area, the method comprising the steps of
triggering a device in the specific geographical area;
receiving in the device a rights object associated to the specific geographical area;
controlling the behavior of the device by applying rules enclosed in the rights object.

2. Method according to claim 1 in which the device is connected to a communication network, the communication network being capable of detecting the current geographical location of the device, wherein triggering the device in the specific geographical area by a signal received from the communication network.

3. Method according to claim 1 in which the device is capable of receiving a signal from a short-range beacon, wherein triggering the device in the specific geographical area by the signal received from the short-range beacon.

4. Method according to claim 1 in which the device is capable of receiving information about its current geographical location from a satellite, wherein triggering the device in the specific geographical area by the information received from the satellite.

5. Method according to claim 2, wherein receiving the rights object via the communication network.

6. Method according to claim 3, wherein receiving the rights object via the short-range beacon.

7. Method according to any of the preceding claims in which the rights object is a DRM rights object.

8. System for conditionally allowing a device capability in a specific geographical area, the system comprising a device equipped with recording capabilities, the system further comprising a triggering source and a rights object source, in which
the device comprises means for receiving a trigger from the triggering source when in the specific geographical area;
the device comprises means for receiving a rights object associated to the specific geographical area from the rights object source;
the device comprises means for controlling its behavior by applying rules enclosed in the rights object.

9. Device for use in the system of claim 8, the device comprising
means for receiving a trigger when in a specific geographical area;
means for receiving a rights object associated to the specific geographical area;
means for controlling its behavior by applying rules enclosed in the rights object.

10. Device according to claim 9 in which the device is connected to a communication network, wherein the device comprises means for receiving the trigger from the communication network when in the specific geographical area.

11. Device according to claim 9 in which the device is capable of receiving a signal from a short-range beacon, wherein the device comprises means for receiving the trigger from the short-range beacon when in the specific geographical area.

12. Device according to claim 9 in which the device is capable of receiving information about its current geographical location from a satellite, wherein the device comprises means for receiving the trigger from the satellite when in the specific geographical area.

13. Device according to claim 10, wherein the device comprises means for receiving the rights object via the communication network.

14. Device according to claim 11, wherein the device comprises means for receiving the rights object via the short-range beacon.

15. Device according to any of claims 9-14 in which the rights object is a DRM rights object.

16. Device according to any of the claims 9-15 in which the device further comprises an application program interface for receiving the rights object.
